(19) Europäisches Patentamt
European Patent Office
Office européen des brevets

(11) EP 4 303 202 A1

(12) **EUROPÄISCHE PATENTANMELDUNG**

(43) Veröffentlichungstag:
**10.01.2024 Patentblatt 2024/02**

(21) Anmeldenummer: **22183291.8**

(22) Anmeldetag: **06.07.2022**

(51) Internationale Patentklassifikation (IPC):
***C04B 26/02*** *(2006.01)* ***C04B 28/02*** *(2006.01)*

(52) Gemeinsame Patentklassifikation (CPC):
(C-Sets verfügbar)
**C04B 26/16; C04B 26/06; C04B 26/14; C04B 26/18; C04B 28/02; C04B 28/06** (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
- **Pfeil, Armin**
**86899 Landsberg am Lech (DE)**
- **Oesterlein, Florian**
**82287 Jesenwang (DE)**

(74) Vertreter: **Hilti Aktiengesellschaft**
**Corporate Intellectual Property**
**Feldkircherstrasse 100**
**Postfach 333**
**9494 Schaan (LI)**

(54) **ZWEIKOMPONENTEN-MÖRTELMASSE MIT THERMORESPONSIVEM INHIBITOR**

(57) In ihrer allgemeinen Form umfasst die Erfindung eine Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) einen oder mehrere Polymerisationsinhibitoren enthält, ausgewählt aus phenolischen Polymerisationsinhibitoren, Phenothiazin und/oder Derivaten davon, stabilen organischen Radikalen, Oximen sowie Pyrimidinol- oder Pyridinol-Verbindungen, die in para-Position zur Hydroxylgruppe substituiert sind, *dadurch gekennzeichnet,* dass die Harzkomponente (A) weiterhin eine Alkoxyamin-Verbindung (I) der Formel R-O-N(R'R") enthält, wobei R für einen Alkylrest steht und R' bzw. R" jeweils für einen organischen Rest steht, und die eine Aktivierungsenergie $E_a$ für die Homolyse der R-O-Bindung im Bereich von 100 bis 120 kJ/mol aufweist. In einer anderen Ausführungsform umfasst die Erfindung eine Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) einen oder mehrere Polymerisationsinhibitoren enthält, ausgewählt aus phenolischen Polymerisationsinhibitoren, Phenothiazin und/oder Derivaten davon, stabilen organischen Radikalen, Oximen sowie Pyrimidinol- oder Pyridinol-Verbindungen, die in para-Position zur Hydroxylgruppe substituiert sind, *dadurch gekennzeichnet,* dass die Harzkomponente (A) weiterhin eine Alkoxyamin-Verbindung der folgenden Formel (II) enthält

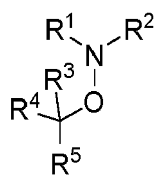 (II).

Des Weiteren betrifft die Erfindung die Verwendung der Zweikomponenten-Mörtelmasse zur chemischen Befestigung von Befestigungselementen wie Ankergewindestangen, Bewehrungseisen, Gewindehülsen und Schrauben, in Bohrlöchern, die in einem in einem Baumaterial, wie etwa Holz oder einem mineralischen Untergrund vorliegen.

EP 4 303 202 A1

(52) Gemeinsame Patentklassifikation (CPC): (Forts.)

C-Sets
**C04B 28/02, C04B 14/042, C04B 14/066, C04B 14/104, C04B 14/106, C04B 14/28, C04B 14/368, C04B 18/08, C04B 22/142, C04B 24/122, C04B 24/128, C04B 24/16, C04B 24/281, C04B 40/065, C04B 2103/10, C04B 2103/30, C04B 2103/44;**
**C04B 28/06, C04B 14/042, C04B 14/066, C04B 14/104, C04B 14/106, C04B 14/28, C04B 14/368, C04B 18/08, C04B 22/142, C04B 24/122, C04B 24/128, C04B 24/16, C04B 24/282, C04B 40/065, C04B 2103/10, C04B 2103/30, C04B 2103/44;**
**C04B 28/06, C04B 14/042, C04B 14/066, C04B 14/104, C04B 14/106, C04B 14/28, C04B 14/368, C04B 18/08, C04B 22/142, C04B 24/122, C04B 24/128, C04B 24/16, C04B 24/283, C04B 40/065, C04B 2103/10, C04B 2103/30, C04B 2103/44**

## Beschreibung

Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält. Die Harzkomponente (A) der erfindungsgemäßen Zweikomponenten-Mörtelmasse enthält ferner einen oder mehrere herkömmliche Polymerisationsinhibitoren, ausgewählt aus phenolischen Polymerisationsinhibitoren, Phenothiazin und/oder Derivaten davon, stabilen organischen Radikalen, Oximen sowie Pyrimidinol- oder Pyridinol-Verbindungen, die in para-Position zur Hydroxylgruppe substituiert sind. Die Zweikomponenten-Mörtelmasse der vorliegenden Erfindung ist *dadurch gekennzeichnet,* dass die Harzkomponente (A) weiterhin eine Alkoxyamin-Verbindung als thermoresponsivem Inhibitor enthält. Gegenstand der Erfindung ist ferner die Verwendung der Mörtelmasse zur chemischen Befestigung von Befestigungselementen wie Ankergewindestangen, Bewehrungseisen, Gewindehülsen und Schrauben in Bohrlöchern, die in einen mineralischen Untergrund eingebracht sind.

Zur sicheren Befestigung von Befestigungselementen, wie Ankergewindestangen, Bewehrungseisen, Gewindehülsen und Schrauben, in einem mineralischen Untergrund wie Beton, Naturstein oder Putz werden zunächst die Bohrlöcher zur Aufnahme der zu befestigenden Befestigungselemente mit den entsprechenden Abmessungen in den mineralischen Untergrund gebohrt. Anschließend werden die Bohrlöcher von Bohrstaub befreit, und die Zweikomponenten-Mörtelmasse wird nach Vermischen der Harzkomponente mit der Härterkomponente in das Bohrloch eingebracht. Danach wird das zu befestigende Befestigungselement in das mit der Mörtelmasse angefüllte Bohrloch eingeführt und justiert. Nach dem Aushärten der Mörtelmasse durch Umsetzung der Harzkomponente mit der Härterkomponente wird ein fester Halt des Befestigungselements im mineralischen Untergrund erreicht.

Das Tragverhalten der so befestigten Befestigungselemente hängt von mehreren Einflussgrößen ab, die üblicherweise als interne und externe Größen klassifiziert werden. Zu den internen Einflussgrößen zählen die chemische Zusammensetzung der Mörtelmasse, ihr Herstellungsprozess und die Verpackung der Mörtelmasse, die typischerweise in zwei getrennten Behältern vorliegende Komponenten umfasst.

Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Aus der EP 0 432 087 und der EP 0 589 831 sind Zweikomponenten-Mörtelmassen auf der Grundlage von Urethan(meth)acrylatharzen bekannt, die durch radikalische Polymerisation aushärten.

Die im Stand der Technik bekannten und als chemische Verbunddübel eingesetzten Mörtelmassen auf der Grundlage von radikalisch härtenden Reaktionsharzen enthalten üblicherweise Polymerisationsinhibitoren. Derartige herkömmliche Polymerisationsinhibitoren werden ausgewählt aus phenolischen Polymerisationsinhibitoren, Phenothiazin und/oder Derivaten davon, stabilen organischen Radikalen, Oximen sowie Pyrimidinol- oder Pyridinol-Verbindungen, die in para-Position zur Hydroxylgruppe substituiert sind. Durch Polymerisationsinhibitoren kann zum einen eine gewisse Lagerstabilität der Mörtelmasse gewährleistet, zum anderen eine gewünschte Offenzeit eingestellt werden. Unter Offenzeit (*"working time"*) wird die Zeitdauer verstanden, während dessen die Mörtelmasse noch flüssig ist, so dass ein Befestigungselement eingebracht werden kann. Die Offenzeit darf nicht zu kurz sein, um das zu befestigenden Befestigungselement in das mit der Mörtelmasse angefüllte Bohrloch einbringen und geeignet ausrichten zu können. Andererseits darf die Offenzeit nicht zu lang sein, da ansonsten die Arbeitsabläufe auf der Baustelle unnötig verzögert werden.

Die Offenzeit ist jedoch stark temperaturabhängig. Die auf einer Baustelle vorgefundene Temperatur ist eine externe Einflussgröße, die nicht beeinflusst oder kontrolliert werden kann. Durch die bei erhöhter Temperatur erhöhte Reaktivität der Komponenten in einer Mörtelmasse sinkt die Offenzeit mit steigender Temperatur. Bei Mörtelmassen, die bei Raumtemperatur (etwa 20°C) eine geeignete Offenzeit aufweisen, ist die bei z.B. 40°C erhaltene Offenzeit zu kurz. Durch eine erhöhte Menge an Polymerisationsinhibitoren kann eine bei 40°C geeignete Offenzeit eingestellt werden. Allerdings ist bei derartigen, mit einer höheren Menge an Polymerisationsinhibitoren versehenen Mörtelmassen die Offenzeit bei niedrigeren Temperaturen dann deutlich zu lang.

Daher besteht ein Bedarf an chemischen Mörteln, die lagerstabil sind und die über einen breiteren Temperaturbereich eine für die praktische Anwendung geeignete Offenzeit aufweisen. Das heißt, es ist ein Ziel der vorliegenden Erfindung, chemische Mörtel bereitzustellen, die sowohl bei niedrigen Temperaturen als auch erhöhten Temperaturen eine Inhibierung der Polymerisationsreaktion aufweisen, die über eine breiten Temperaturbereich praktisch nutzbare Offenzeiten ermöglicht.

Es hat sich überraschenderweise gezeigt, dass die vorstehend beschriebene Aufgabe durch eine Zweikomponenten-Mörtelmasse gemäß Anspruch 1 oder gemäß Anspruch 3 gelöst wird.

Bevorzugte Ausführungsformen der erfindungsgemäßen Mörtelmasse sind in den Unteransprüchen angegeben, die wahlweise miteinander kombiniert werden können.

Gegenstand der Erfindung ist ferner die Verwendung der Mörtelmasse zur chemischen Befestigung von Befestigungselementen wie Ankergewindestangen, Bewehrungseisen, Gewindehülsen und Schrauben in Bohrlöchern, die

in einem Baumaterial, wie etwa Holz oder einem mineralischem Untergrund, vorzugsweise Beton, vorliegen.

Der vorliegenden Erfindung liegt die Idee zugrunde, eine ansonsten herkömmliche Mörtelmasse zusätzlich mit einem thermoresponsiven Polymerisationsinhibitor zu versehen. Als *"thermoresponsiver Polymerisationsinhibitor"* wird erfindungsgemäß ein Inhibitor verstanden, der bei niedrigen Temperaturen oder Raumtemperatur keine oder kaum inhibierende Wirkung zeigt, aber bei höheren Temperaturen einen merklichen inhibierenden Beitrag leistet. Im Zusammenspiel mit herkömmlichen Polymerisationsinhibitoren, die bei Mörtelsystemen bereits etabliert sind, könnte ein derartiger thermoresponsiver Polymerisationsinhibitor bewirken, dass eine lagerstabile Mörtelmasse erhalten werden kann, die sowohl bei niedrigen Temperaturen als auch bei erhöhten Temperaturen eine für den Praxiseinsatz geeignete Offenzeit aufweist. Eine besondere Aufgabe der vorliegenden Erfindung ist es daher, Verbindungen zu finden, die mit der speziellen Chemie in einer komplexen Mörtelmasse mit typischerweise vielen verschiedenen Bestandteilen kompatibel sind, und bei niedriger Temperatur (wie z.B. Raumtemperatur) keine oder kaum inhibierende Wirkung auf die radikalische Härtungsreaktion zeigen, aber bei erhöhter Temperatur (wie z.B. 40°C oder mehr) eine signifikante Inhibierungswirkung aufweisen.

In einer allgemeinen Ausführungsform umfasst die Erfindung eine Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) einen oder mehrere Polymerisationsinhibitoren enthält, ausgewählt aus phenolischen Polymerisationsinhibitoren, Phenothiazin und/oder Derivaten davon, stabilen organischen Radikalen, Oximen sowie Pyrimidinol- oder Pyridinol-Verbindungen, die in para-Position zur Hydroxylgruppe substituiert sind, dadurch gekennzeichnet, dass die Harzkomponente (A) weiterhin eine Alkoxyamin-Verbindung (I) enthält, die eine Aktivierungsenergie $E_a$ für die Homolyse der R-O-Bindung im Bereich von 100 bis 120 kJ/mol aufweist.

Alkoxyamine sind Verbindungen, die das Strukturelement R-O-N(R'R") enthalten, wobei R für einen Alkylrest steht und R' bzw. R" jeweils für einen organischen Rest steht. Die N-O-R-Gruppe in einem Alkoxyamin unterliegt der Homolyse der R-O-Bindung, d.h. es stellt sich ein thermoreversibles Gleichgewicht zwischen der Alkoxyamin-Verbindung einerseits bzw. einem Alkylradikal R• und einem Nitroxylradikal •O-N(R'R") andererseits ein. Die Homolyse weist für eine gegebene Alkoxyamin-Verbindung eine bestimmte Aktivierungsenergie $E_a$ auf, die gemessen (oder berechnet) werden kann. Die Bestimmung von Aktivierungsenergien ist einem Fachmann im Allgemeinen gut bekannt.

Gemäß der Erfindung werden Aktivierungsenergien durch Messung der Reaktionsgeschwindigkeitskonstanten k für die Homolyse-Reaktion mittels Elektronenspinresonanz (ESR; eng.: *electron paramagnetic resonance,* EPR) bei einer Temperatur von 50°C bestimmt. Die Aktivierungsenergie $E_a$ wird dann aus der gemessenen Reaktionsgeschwindigkeitskonstanten k über die Arrhenius-Gleichung

$$k = A \cdot e^{-\frac{Ea}{RT}}$$

berechnet. Der präexponentielle Faktor A beträgt dabei A = 2,4 * $10^{14} s^{-1}$. R ist die allgemeine Gaskonstante und T ist die absolute Temperatur (in [K]). Für die Messung wird eine Lösung des Alkoxyamins in tertbutyl-Benzol mit einer Konzentration von $10^{-4}$ mol·$l^{-1}$ eingesetzt.

Erfindungsgemäß werden als Alkoxyamin-Verbindung (I) Alkoxyamine ausgewählt, die eine Aktivierungsenergie $E_a$ für die Homolyse der R-O-Bindung im Bereich von 100 bis 120 kJ/mol aufweisen. Die Erfinder der vorliegenden Erfindung haben festgestellt, dass in einem Bereich von 100 bis 120 kJ/mol der Aktivierungsenergie $E_a$ für die Homolyse der R-O-Bindung bei Raumtemperatur kaum Homolyse stattfindet, so dass bei Raumtemperatur auch kaum Radikale für eine eventuelle Inhibierung der radikalischen Härtungsreaktion des radikalisch härtbaren Harzes der Harzkomponente (A) vorliegen. Dadurch läuft die radikalische Härtungsreaktion des radikalisch härtbaren Harzes der Harzkomponente (A) bei Raumtemperatur unbeeinflusst von der zusätzlichen Anwesenheit der Alkoxyamin-Verbindung (I) ab. Bei höheren Temperaturen, wie etwa bei einer Temperatur von 40°C oder höher, findet im Falle einer Aktivierungsenergie $E_a$ für die Homolyse der R-O-Bindung im Bereich von 100 bis 120 kJ/mol aber bereits merklich Homolyse statt, so dass ausreichend Radikale für eine zusätzliche Inhibierung der radikalischen Härtungsreaktion des radikalisch härtbaren Harzes der Harzkomponente (A) vorhanden sind. Daher hat bei höheren Temperaturen die zusätzliche Anwesenheit der Alkoxyamin-Verbindung (I) eine signifikante inhibierende Wirkung auf die radikalischen Härtungsreaktion des radikalisch härtbaren Harzes der Harzkomponente (A), d.h. es ergibt sich bei höherer Temperatur eine im Vergleich zur Abwesenheit der Alkoxyamin-Verbindung (I) verlängerte Offenzeit. Auf diese Weise kann erfindungsgemäß eine Mörtelmasse bereitgestellt werden, die gleichzeitig bei sowohl niedrigen Temperaturen als auch bei erhöhter Temperatur eine praxistaugliche Offenzeit aufweist.

In einer bevorzugten Ausführungsform liegt die Aktivierungsenergie $E_a$ für die Homolyse der R-O-Bindung in der Alkoxyamin-Verbindung (I) im Bereich von 100 bis 110 kJ/mol. In einer stärker bevorzugten Ausführungsform liegt die Aktivierungsenergie $E_a$ für die Homolyse der R-O-Bindung in der Alkoxyamin-Verbindung (I) im Bereich von 100 bis 108 kJ/mol.

In einer anderen allgemeinen Ausführungsform umfasst die Erfindung eine Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) einen oder mehrere Polymerisationsinhibitoren enthält, ausgewählt aus phenolischen Polymerisationsinhibitoren, Phenothiazin und/oder Derivaten davon, stabilen organischen Radikalen, Oximen sowie Pyrimidinol- oder Pyridinol-Verbindungen, die in para-Position zur Hydroxylgruppe substituiert sind, *dadurch gekennzeichnet,* dass die Harzkomponente (A) weiterhin eine Alkoxyamin-Verbindung der folgenden Formel (II) enthält

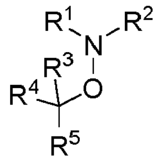

(II)

wobei

$R^1$ eine $C_{3-10}$-Alkylgruppe ist;
$R^2$ eine $C_{2-10}$-Alkylgruppe ist, wobei $R^1$ und $R^2$ zusammen mit dem N-Atom, an das sie gebunden sind, gegebenenfalls einen gegebenenfalls substituierten, gegebenenfalls ungesättigten Heteroalkylring bilden können,
$R^3$ H oder eine $C_{1-4}$-Alkylgruppe ist,
$R_4$ eine $C_{1-4}$-Alkylgruppe ist, und
$R^5$ eine Aryl- oder Heteroarylgruppe ist.

Die $R^3R^4R^5C$-O-Bindung in der Alkoxyamin-Verbindung der Formel (II) unterliegt der thermoreversiblen Homolyse gemäß nachstehender Reaktionsgleichung:

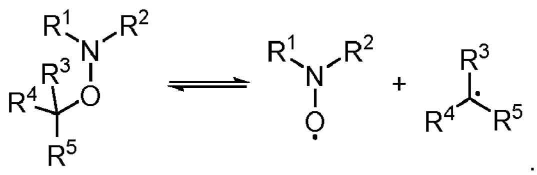

Aus der Alkoxyamin-Verbindung der Formel (II) bildet sich durch Homolyse der $R^3R^4R^5C$-O-Bindung ein Nitroxylradikal der Formel •O-N($R^1R^2$) und ein Alkylradikal der Formel ($R^3R^4R^5$)C•. Zumindest eines der sich dabei bildenden Radikale soll gemäß der Erfindung einen guten Inhibitor für die radikalische Polymerisation des radikalisch härtbaren Harzes der Harzkomponente (A) darstellen. Ansonsten sollen die sich bildenden Radikale die zum Teil komplexe Chemie in dem Mörtelsystem nicht stören. Dies wird erfindungsgemäß durch geeignete Substituierung in der Alkoxyamin-Verbindung der Formel (II) erreicht.

Demgemäß stellt $R^1$ in der Alkoxyamin-Verbindung der Formel (II) eine $C_{3-10}$-Alkylgruppe dar. Vorzugsweise ist $R^1$ eine $C_{4-8}$-Alkylgruppe. $R^1$ kann linear oder verzweigt sein. Vorzugsweise ist $R^1$ in $\alpha$-Position zum Stickstoffatom, an das es gebunden ist, verzweigt. In einer bevorzugten Ausführungsform stellt $R^1$ eine in $\alpha$-Position zum Stickstoffatom verzweigte $C_{4-8}$-Alkylgruppe dar. $R^1$ kann ferner substituiert oder unsubstituiert sein.

$R^2$ stellt in der Alkoxyamin-Verbindung der Formel (II) eine $C_{2-10}$-Alkylgruppe dar, beispielsweise eine $C_{4-8}$-Alkylgruppe. $R^2$ kann linear oder verzweigt sein. Vorzugsweise ist $R^2$ in $\beta$-Position zum Stickstoffatom, an das es gebunden ist, verzweigt. Zusätzlich oder alternativ kann $R^2$ gegebenenfalls auch in $\alpha$-Position zum Stickstoffatom verzweigt sein. Ferner kann $R^2$ substituiert oder unsubstituiert sein. Beispielsweise kann $R^2$ in $\alpha$-Position zum Stickstoffatom substituiert sein.

Alternativ können $R^1$ und $R^2$ zusammen mit dem N-Atom, an das sie gebunden sind, gegebenenfalls einen Heteroalkylring bilden. Dieser Heteroalkylring kann unsubstituiert oder gegebenenfalls substituiert sein. Ferner kann der Heteroalkylring gesättigt oder gegebenenfalls teilweise ungesättigt sein.

$R^3$ stellt in der Alkoxyamin-Verbindung der Formel (II) H oder eine $C_{1-4}$-Alkylgruppe dar. $R^3$ kann substituiert oder unsubstituiert sein. Ferner kann $R^3$ linear oder verzweigt sein. In einer Ausführungsform ist $R^3$ ein Wasserstoffatom.

$R^4$ ist in der Alkoxyamin-Verbindung der Formel (II) eine $C_{1-4}$-Alkylgruppe. Das heißt, dass sich das ungepaarte Elektron im Alkylradikal der Formel ($R^3R^4R^5$)C• an einem (zumindest) sekundärem oder einem tertiärem C-Atom befindet. $R^4$ kann substituiert oder unsubstituiert sein. Ferner kann $R_4$ linear oder verzweigt sein. In einer Ausführungsform ist $R_4$ eine Methylgruppe.

$R^5$ ist in der Alkoxyamin-Verbindung der Formel (II) eine Aryl- oder Heteroarylgruppe, beispielsweise eine $C_{6-20}$-Arylgruppe, wie etwa Phenyl, Naphthyl, Anthracenyl oder Pyrenyl. Das heißt, das ungepaarte Elektron im Alkylradikal der Formel ($R^3R^4R^5$)C• befindet sich in $\alpha$-Position zu einem konjugierten $\pi$-System. $R^5$ kann substituiert oder unsubstituiert sein. In einer Ausführungsform ist $R^5$ Naphthyl oder Pyrenyl, vorzugsweise Pyrenyl.

Optionale Substituenten in den gegebenenfalls substituierten Resten $R^1$, $R^2$, $R^3$, $R^4$ oder $R^5$ sind nicht besonders beschränkt und können beispielsweise ausgewählt werden aus Alkyl-Substituenten (wie etwa $C_{1-4}$-Alkyl) oder Halogenatomen, usw. In einer Ausführungsform enthält $R^1$, $R^2$, $R^3$, $R^4$ oder $R^5$ gegebenenfalls weiterhin einen protonierbaren, einen deprotonierbaren oder einen hydrolysierbaren Rest. Beispiele für protonierbare optionale Substituenten in $R^1$, $R^2$, $R^3$, $R^4$ oder $R^5$ beinhalten, sind aber nicht beschränkt auf Amin-Gruppen, wie etwa Dialkylamin (z.B. Di-$C_{1-4}$-Alkylamin). Beispiele für deprotonierbare optionale Substituenten in $R^1$, $R^2$, $R^3$, $R^4$ oder $R^5$ beinhalten, sind aber nicht beschränkt auf Carbonsäure-Gruppen, Sulfonsäure-Gruppen, Sulfinsäure-Gruppen oder Phosphonsäure-Gruppen. Beispiele für hydrolysierbare optionale Substituenten in $R^1$, $R^2$, $R^3$, $R^4$ oder $R^5$ beinhalten, sind aber nicht beschränkt auf Alkylester (z.B. $C_{1-4}$-Alkylester) von Carbonsäuren, Sulfonsäuren, Sulfinsäuren oder Phosphonsäuren. In einer Ausführungsform ist $R^2$ in $\alpha$-Position zum Stickstoffatom substituiert, wobei der Substituent vorzugsweise ausgewählt ist aus einer Carbonsäurealkylestergruppe, Sulfinatgruppe, Sulfonatgruppe und Phosphonatgruppe.

In einer Ausführungsform liegt die Aktivierungsenergie $E_a$ für die Homolyse der $R^3R^4R^5$C-O-Bindung in der Alkoxyamin-Verbindung der Formel (II) im Bereich von 100 bis 120 kJ/mol. In einer bevorzugten Ausführungsform liegt die Aktivierungsenergie $E_a$ für die Homolyse der $R^3R^4R^5$C-O-Bindung in der Alkoxyamin-Verbindung der Formel (II) im Bereich von 100 bis 110 kJ/mol. In einer stärker bevorzugten Ausführungsform liegt die Aktivierungsenergie $E_a$ für die Homolyse der $R^3R^4R^5$C-O-Bindung in der Alkoxyamin-Verbindung der Formel (II) im Bereich von 100 bis 108 kJ/mol.

Wie vorstehend ausgeführt enthält die Zweikomponenten-Mörtelmasse der vorliegenden Erfindung in der Harzkomponente (A) einen oder mehrere herkömmliche Polymerisationsinhibitoren. Erfindungsgemäß werden die (herkömmlichen) Polymerisationsinhibitoren aus phenolischen Polymerisationsinhibitoren, Phenothiazin und/oder Derivaten davon, stabilen organischen Radikalen, Oximen sowie Pyrimidinol- oder Pyridinol-Verbindungen, die in para-Position zur Hydroxylgruppe substituiert sind, ausgewählt. Derartige Polymerisationsinhibitoren sind üblicherweise in Mengen von 0,1 bis 1,0 Gew.-%, bezogen auf die Menge radikalisch härtbaren Harzes der Harzkomponente (A), enthalten.

Beispiele für derartige Polymerisationsinhibitoren sind insbesondere Hydrochinon, substituierte Hydrochinone, z.B. 4-Methoxyphenol, Phenothiazin, Benzochinon oder tert-Butylbrenzkatechin, wie sie beispielsweise in der EP 1935860 A1 oder EP 0965619 A1 beschrieben werden, Nitroxylverbindungen, insbesondere stabile Nitroxylradikale, auch N-Oxyl-Radikale genannt, wie Piperidinyl-N-oxyl oder Tetrahydropyrrol-N-oxyl, wie sie in der DE 19531649 A1 beschrieben sind. Besonders bevorzugt wird 4-Hydroxy-2,2,6,6-tetramethylpiperidin-N-oxyl (im Folgenden als Tempol bezeichnet) zur Stabilisierung verwendet.

Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Polymerisationsinhibitoren, die oft Bestandteil von kommerziellen radikalisch härtenden Reaktionsharzen sind, kommen Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thiobis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und N-Oxyl-Radikale in Betracht.

Geeignete stabile N-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden, wie sie in der DE199 56 509 beschrieben sind. Ferner sind geeignete N-Oxylverbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen. Ferner können in para-Position zur Hydroxylgruppe substituierte Pyrimidinol- oder Pyridinol-Verbindungen als Polymerisationsinhibitoren verwendet werden, wie sie in der DE 10 2011 077 248 B1 beschrieben sind.

Die Polymerisationsinhibitoren können, abhängig von den gewünschten Eigenschaften und der Verwendung der Harzmischung, entweder allein oder als Kombination von zweien oder mehreren davon verwendet werden. Die Kombination der phenolischen und der nicht-phenolischen Polymerisationsinhibitoren ermöglicht dabei einen synergistischen Effekt, wie auch die Einstellung einer im Wesentlichen driftfreien Einstellung der Gelierzeit der Reaktionsharzformulierung zeigt.

In einer Ausführungsform enthält die Mörtelmasse die Alkoxyamin-Verbindung (I) oder die Alkoxyamin-Verbindung der Formel (II) in einer Menge von 0,5 bis 100 Äquivalenten, bezogen auf ein Äquivalent der vorstehend beschriebenen (herkömmlichen) Polymerisationsinhibitoren, vorzugsweise 1 bis 10 Äquivalente an Alkoxyamin-Verbindung (I) oder Alkoxyamin-Verbindung der Formel (II) auf ein Äquivalent der herkömmlichen Polymerisationsinhibitoren.

Die Befestigung von Befestigungselementen unter Verwendung der erfindungsgemäßen Zweikomponenten-Mörtelmasse ergibt bei sowohl niedrigen als auch erhöhten Temperaturen praxistaugliche Offenzeiten. Dies wird erfindungsgemäß dadurch erreicht, dass zusätzlich zu herkömmlichen Polymerisationsinitiatoren ein thermoresponsiver Photoinitiator, d.h. eine Alkoxyamin-Verbindung (I) oder eine Alkoxyamin-Verbindung der Formel (II), in der die Harzkomponente (A) der Mörtelmassen enthalten ist.

Weitere Vorteile der Erfindung ergeben sich aus der folgenden Beschreibung bevorzugter Ausführungsformen.

Unter einer *"Zweikomponenten-Mörtelmasse"* wird im Sinne der Erfindung eine Mörtelmasse verstanden, die aus einer härtbaren Harzkomponente und einer Härterkomponente für die Harzkomponente besteht, wobei die Harzkomponente und die Härterkomponente getrennt voneinander gelagert werden, sodass während der Lagerung keine Umsetzung der Härterkomponente mit der Harzkomponente erfolgt. Durch Vermischen der Härterkomponente mit dem Reaktivharz unmittelbar vor der Anwendung der Mörtelmasse wird die Aushärtung des Reaktivharzes gestartet.

Die Mörtelmasse gemäß der vorliegenden Erfindung kann weiterhin in der Harzkomponente (A) und/oder der Härterkomponente (B) mindestens einen anorganischen Zusatz als weiteren Bestandteil enthalten. Der Begriff *"anorganischer Zusatzstoff"* bezieht sich auf alle anorganischen Bestandteile der Mörtelmasse. Die Verwendung von anorganischen Zusatzstoffen in Mörtelmassen ist im Stand der Technik bekannt. Dabei kann die erfindungsgemäße Mörtelmasse hohe Mengen an anorganischen Zusatzstoffen enthalten. Beispielsweise liegt die Menge an anorganischem Zusatzstoff in einem Bereich von 40 bis 75 Gew.-%, bezogen auf das Gesamtgewicht der Mörtelmasse. In einer Ausführungsform liegt die Menge an anorganischem Zusatzstoff in einem Bereich von 15 bis 65 Gew.-%, wie beispielsweise 30 bis 60 Gew.-%, bezogen auf das Gesamtgewicht der Mörtelmasse.

Die anorganischen Zusatzstoffe können beispielsweise aus anorganischen Füllstoffen, hydraulisch abbindenden oder polykondensierbaren anorganische Verbindungen, Modifikatoren und Mischungen davon ausgewählt sein.

Bevorzugt umfasst der anorganische Zusatzstoff einen Füllstoff, der in der Harzkomponente (A) und/oder in der Härterkomponente (B) enthalten sein kann. Beispiele für geeignete Füllstoffe sind $BaSO_4$, Quarz, Glas, Korund, Porzellan, Steingut, Schwerspat, Leichtspat, Gips, Talkum, Flugasche und/oder Kreide sowie deren Mischungen, etwa in Form von Sanden, Mehlen oder Formkörpern, vorzugsweise in Form von Fasern oder Kugeln.

Gemäß einer Ausführungsform der Erfindung umfasst der anorganische Zusatzstoff ferner eine hydraulisch abbindende oder polykondensierbare anorganische Verbindung, wie Zement und/oder Gips, vorzugsweise Eisenoxid-freien oder Eisenoxid-armen Zement wie Aluminat-Zement. Die hydraulisch abbindende oder polykondensierbare anorganische Verbindung ist vorzugsweise in der Härterkomponente (A) enthalten. Die Härterkomponente (B) umfasst in diesem Fall neben dem Härtungsmittel und dem für die Phlegmatisierung des Härtungsmittels wahlweise enthaltenen Wassers noch zusätzliches Wasser für das Aushärten der hydraulisch abbindenden oder polykondensierbaren anorganischen Verbindung.

Schließlich kann der anorganische Zusatzstoff in der Harzkomponente (A) und/oder in der Härterkomponente (B) noch weitere anorganische Modifikatoren wie Verdicker und Thixotropiermittel enthalten, beispielsweise gefällte oder pyrogene Kieselsäure, Bentonite und/oder Kaolin.

Zweikomponenten-Mörtelmasse der vorliegenden Erfindung umfasst weiterhin in der Harzkomponente (A) als härtbaren Bestandteil mindestens ein radikalisch härtbares Harz. Radikalisch härtbare Harze zur Verwendung in Mörtelmassen sind im Stand der Technik bekannt. Erfindungsgemäß geeignete radikalisch härtbare Harze umfassen beispielsweise ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättigter Polyester, die in der erfindungsgemäßen Zweikomponenten-Mörtelmasse verwendet werden können, werden in folgende Kategorien eingeteilt:

(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;

(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion eines Diacids, z.B. Maleinsäure, mit Dicyclopentadien, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht $M_n$ im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt. In diesem Zusammenhang wird auf die Anmeldung US 2011/071234 verwiesen.

Das Vinylester-Harz hat bevorzugt ein Molekulargewicht $M_n$ im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Beispiele für derartige Epoxy(meth)acrylate sind solche der Formel (A)

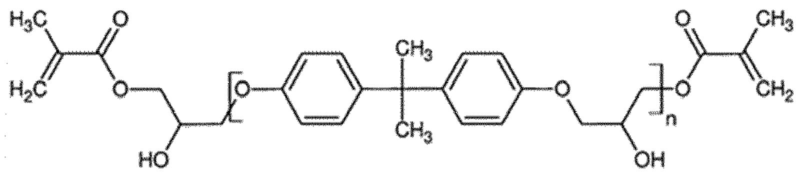

(A)

worin n für eine Zahl grösser oder gleich 1 steht (wenn Gemische verschiedener Moleküle mit unterschiedlichen n-Werten vorliegen und durch die Formel (A) repräsentiert werden, sind auch nicht-ganzzahlige Zahlen als Mittelwert möglich).

Weitere Beispiele für die propoxylierten oder insbesondere ethoxylierten aromatischen Diol-, wie Bisphenol-A-, Bisphenol-F- oder Novolak- (insbesondere di-)(meth)acrylate sind solche der Formel (B)

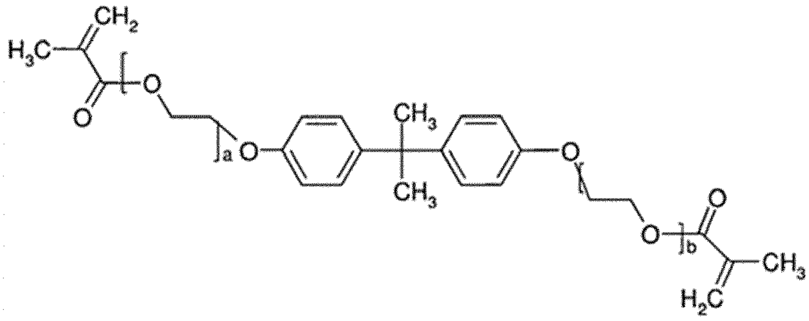

(B)

worin a und b jeweils unabhängig voneinander für eine Zahl grösser oder gleich 0 stehen mit der Maßgabe, dass vorzugsweise mindestens einer der Werte grösser als 0 ist, vorzugsweise beide 1 oder grösser sind (wenn Gemische verschiedener Moleküle mit unterschiedlichen (a und b)-Werten vorliegen und durch die Formel (B) repräsentiert werden, sind auch nicht-ganzzahlige Zahlen als Mittelwert möglich).

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)Isocyanaten und 2,2-Propanbis-[3-(4-phenoxy)-1,2-hydroxypropan-1-methacrylat] nach der US PS 3 629 187 sowie die Addukte aus Isocyanaten und Methacryloylalkylethern, alkoxybenzolen bzw. alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen.

Selbstverständlich können auch Gemische aus geeigneten Monomeren verwendet werden.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 (Itaconsäureester) beschrieben sind.

Der prozentuale Anteil (in Gew.-% der Harzkomponente) von radikalisch härtbarem Harz in der Harzkomponente (A) beträgt vorteilhafterweise mehr als etwa 5%, bevorzugt mehr als etwa 15%, und besonders bevorzugt mehr als etwa 20%. Der prozentuale Anteil (in Gew.-% der Harzkomponente) von radikalisch härtbaren Harz in der Harzkomponente beträgt vorteilhafterweise von etwa 10% bis etwa 90%, bevorzugt von etwa 15% bis etwa 80%, bevorzugter von etwa 20% bis etwa 60%, bevorzugter von etwa 25% bis etwa 55%, noch bevorzugter von etwa 30% bis etwa 55%, besonders bevorzugt von etwa 30% bis etwa 50% und ganz besonders bevorzugt von etwa 32% bis etwa 45%.

Das radikalisch härtbare Harz in der Komponente (A) der erfindungsgemäßen Mörtelmasse umfasst bevorzugt ein Urethan(meth)acrylatharz und/oder ein (meth)acrylatmodifiziertes Epoxidharz. In einer bevorzugten Ausführungsform ist das radikalisch härtbare Harz ein Urethan(meth)acrylatharz.

Zur Herstellung eines geeigneten Urethan(meth)acrylatharzes kann ein mindestens difunktionelles Isocyanat mit einer oder mehreren hydroxyfunktionellen, ethylenisch ungesättigten Verbindungen umgesetzt werden, insbesondere mit hydroxyfunktionellen (Meth)acrylverbindungen.

Das mindestens difunktionelle Isocyanat zur Herstellung des Urethan(meth)acrylatharzes kann ein aromatisches Isocyanat, ein aliphatisches Isocyanat, insbesondere ein cycloaliphatisches Isocyanat und ein Isocyanatgruppen enthaltendes Präpolymer sein, die auch im Gemisch miteinander eingesetzt werden können.

Beispiele für geeignete aliphatische und aromatische Isocyanate umfassen m-Phenylendiisocyanat, Toluylen-2-4-diisocyanat, Toluylen-2-6-diisocyanat, Hexamethylen-1,6-diisocyanat, Tetramethylen-1,4-diisocyanat, Cyclohexan-1,4-diisocyanat, Hexahydrotoluylendiisocyanat, Naphthylen-1,5-diisocyanat, Methoxyphenyl-2,4-diisocyanat, Diphenylmethan-4,4'-diisocyanat, 4,4'-biphenylendiisocyanat, 3,3'-Dimethoxy-4,4'-biphenyldiisocyanat, 3,3'-Dimethyl-4,4'-biphenyldiisocyanat, 3,3'-Dimethyldiphenylmethan-4,4'-diisocyanat, 4,4',4"-Triphenylmethantriisocyanat, Polymethylenpolyphenylisocyanat (PMDI), Toluylen-2,4,6-triisocyanat und 4,4'-Dimethyldiphenylmethan-2,2',5,5'-tetraisocyanat.

Diphenylmethan-4,4'-diisocyanat, Diphenylmethan-2,4'-diisocyanat und Mischungen davon werden gemeinsam als MDI bezeichnet, und alle können verwendet werden. Toluylen-2,4-diisocyanat, Toluylen-2,6-diisocyanat und Mischungen davon werden allgemein als TDI bezeichnet, und können ebenfalls alle verwendet werden.

Bevorzugt ist das Polyisocyanat aus der aus Diphenylmethandiisocyanat (MDI), polymerem Diphenylmethandiisocyanat (PMDI), Toluylendiisocyanat (TDI), Hexandiisocyanat (HDI), Isophorondiisocyanat (IPDI) und Mischungen davon bestehenden Gruppe ausgewählt.

Isocyanat-Präpolymere, die durch Reaktion eines stöchiometrischen Überschusses eines beliebigen Polyisocyanats mit einer isocyanatreaktiven Verbindung als Kettenverlängerer hergestellt werden, können ebenfalls verwendet werden, wahlweise im Gemisch mit den oben genannten aromatischen und aliphatischen Isocyanaten.

Beispiele für derartige Kettenverlängerer sind zweiwertige Alkohole wie Ethandiol, Diethylenglycol, Triethylenglycol und Polyethylenglycol, Propandiol, Dipropylenglycol, Tripropylenglycol und Polypropylenglycol, 1,4-Butandiol, 1,6-Hexandiol, Neopentylglycol und Diethanolamin, weiter aromatische Alkohole wie Bisphenol-A und Bisphenol-F oder deren Ethoxylierungsprodukte, Hydrierungsprodukte und/oder Halogenierungsprodukte, höherwertige Alkohole wie Glycerin, Trimethylolpropan, Hexantriol und Pentaerythrit, hydroxylgruppenhaltige Polyether wie beispielsweise Oligomere aliphatischer oder aromatischer Oxirane und/oder höherer cyclischer Ether, beispielsweise von Ethylenoxid, Propylenoxid, Styroloxid und Furan, Polyether, die in der Hauptkette aromatische Struktureinheiten enthalten, wie beispielsweise die Polyether des Bisphenol A und F, sowie hydroxylgruppenhaltige Polyester auf Basis der obengenannten Alkohole und Polyether mit Dicarbonsäuren oder ihrer Anhydride wie Adipinsäure, Phthalsäure, Tetra- oder Hexahydrophthalsäure, Hetsäure, Maleinsäure, Fumarsäure, Itaconsäure und Sebacinsäure.

Kettenverlängerer mit aromatischen Struktureinheiten dienen zur Kettenversteifung des Harzes. Hydroxylverbindungen mit ungesättigten Struktureinheiten wie Fumarsäure können zur Erhöhung der Vernetzungsdichte während der Aushärtung herangezogen werden. Verzweigte oder sternförmige Hydroxylverbindungen als Kettenverlängerer, insbesondere drei- und höherwertige Alkohole sowie Polyether und/oder Polyester, die deren Struktureinheiten enthalten, ergeben verzweigte oder sternförmige Urethan(meth)acrylate, die eine niedrigere Viskosität der Harze und eine verbesserte Löslichkeit in Reaktivverdünnern aufweisen.

Die hydroxyfunktionelle (Meth)acrylverbindung zur Herstellung des Urethan(meth)acrylatharzes der Harzkomponente (A) ist vorzugweise ein (Meth)acrylsäurehydroxyalkylester, wie Hydroxyethyl(meth)acrylat, Hydroxypropyl(meth)acrylat, Polyoxyethylen(meth)acrylat, Polyoxypropylen(meth)acrylat, oder ein hydroxylgruppenhaltiger (Meth)acrylsäureester von mehrwertigen Alkoholen wie Pentaerythrittri(meth)acrylat, Glycerol-di(meth)acrylat, Trimethylol-propandi(meth)acrylat und Neopentylglycolmono(meth)acrylat.

Die hier und im Folgenden verwendete Bezeichnung *"(Meth)acryl..."* oder *"...(meth)acryl..."* bedeutet, dass von dieser Bezeichnung sowohl die Acrylgruppe als auch die Methacrylgruppe umfasst sein soll.

Die Umsetzung des mindestens difunktionellen Isocyanats mit der hydroxyfunktionellen, ethylenisch ungesättigten Verbindung erfolgt derart, dass das so erhaltene radikalisch härtbare Harz der Harzkomponente (A) im Wesentlichen frei von freien Isocyanatgruppen ist. Im Wesentlichen frei bedeutet hier, dass das Harz einen NCO-Gehalt von weniger als 2% aufweist, vorzugsweise weniger als 1% und besonders bevorzugt weniger als 0,3%. Dazu wird die hydroxyfunktionelle, ethylenisch ungesättigte Verbindung in einem stöchiometrischen Überschuss über die Isocyanatgruppen eingesetzt.

Als weitere radikalisch härtbare Harze können beispielsweise Vinylester, Epoxy(meth)acrylate, ungesättigte Polyesterharze und Mischungen davon eingesetzt werden, allein oder auch zusammen mit dem oben beschriebenen (Poly)urethan(meth)acrylat.

Ungesättigte Polyesterharze werden durch Umsetzung von ungesättigten Dicarbonsäuren wie o- und/oder iso-Phthalsäure, Maleinsäure und Fumarsäure mit Dialkoholen erhalten.

Als Epoxy(meth)acrylate werden üblicherweise Kondensate von (Meth)acylsäure mit Glycidylethern von Bisphenol-A, Bisphenol-F oder Novolaken eingesetzt.

Das radikalisch härtbare Harz liegt beispielsweise in einem Anteil von 10 bis 40 Gewichtsprozent in der Mörtelmasse vor.

Gemäß einer bevorzugten Ausführungsform der Erfindung enthält die Harzkomponente (A) in allen oben beschriebenen Ausführungsformen als weiteren Bestandteil mindestens einen Reaktivverdünner, der wenigstens eine ethylenisch ungesättigte Gruppe aufweist. Geeignete Reaktivverdünner sind insbesondere (Meth)acrylatverbindungen sowie Allyl- und Vinylverbindungen.

Geeignete Reaktivverdünner sind in der EP 1 935 860 A1 und der DE 195 31 649 A1 beschrieben. Vorzugsweise enthält die Harzmischung als Reaktivverdünner einen (Meth)acrylsäureester, wobei besonders bevorzugt aliphatische oder aromatische $C_5$-$C_{15}$ (Meth)acrylate ausgewählt werden. Geeignete Beispiele umfassen: Hydroxypropyl(meth)acrylat, 1,2-Ethandioldi-(meth)acrylat, 1,3-Propandioldi(meth)acrylat, 1,2-Butandioldi(meth)acrylat, 1,4-Butandioldi(meth)acrylat (BBDMA), T rimethylolpropantri(meth)acrylat, Phenethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acηlat, Bisphenol-A-(meth)acrylat, Novolakepoxidi(meth)acrylat, Di-[(meth)acryloyl-maleoyl]-tricyclo-5.2.1.0.2.6-decan, Dicyclopentenyloxyethylcrotonat, 3-(Meth)acryloyl-oxymethyl-tricylo-5.2.1.0.2.6-decan, 3-(Meth)cyclo-pentadienyl(meth)acrylat, Isobornyl(meth)acrylat und Decalyl-2-(meth)acrylat; PEG-di(meth)acrylate, wie PEG200-di(meth)acrylat, Tetraethylenglykol-di(meth)acrylat, Solketal(meth)acrylat, Cyclohexyl(meth)acrylat, Phenoxyethyl-di(meth)acrylat, Methoxyethyl(meth)acrylat, Tetrahydrofurfuryl(meth)acrylat, tert-Butyl(meth)acrylat und Norbornyl(meth)acrylat.

Grundsätzlich können auch andere übliche, radikalisch härtbare Verbindungen, allein oder im Gemisch mit den (Meth)acrylsäureestern, eingesetzt werden, z. B. Styrol, α-Methylstyrol, alkylierte Styrole, wie tert-Butylstyrol, Divinylbenzol und Allylverbindungen, wobei die nicht kennzeichnungspflichtigen Vertreter davon bevorzugt sind.

Besonders bevorzugte Reaktivverdünner sind Hydroxypropyl(meth)acrylat, 1,4-Butandioldi(meth)acrylat und Butandiol-1,2-di(meth)acrylat.

Der Reaktionsverdünner dient zum einen als Lösungsmittel für das radikalisch härtbare Harz und zum anderen als ein Comonomer, das an der radikalischen Polymerisation der Harzkomponente teilnimmt. Die Verwendung von Reaktionsverdünnern führt zu einer weiteren Verbesserung der Haftung der ausgehärteten Mörtelmasse an den Oberflächen des mineralischen Untergrunds und/oder des zu befestigenden Befestigungselements.

Der Reaktivverdünner liegt in der Mörtelmasse beispielsweise in einem Anteil von 0 bis 25 Gewichtsprozent vor, wie etwa von 4 bis 25 Gewichtsprozent oder von 8 bis 15 Gewichtsprozent. Alle radikalisch härtbaren Verbindungen liegen in der Mörtelmasse bevorzugt in einem Anteil von bis zu höchstens 30 Gewichtsprozent vor.

Gemäß einer weiter bevorzugten Ausführungsform der Erfindung enthält die Harzkomponente (A) wenigstens einen Beschleuniger für das Härtungsmittel. Geeignete Beschleuniger, die gewöhnlich der Harzmischung zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N, N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylamino-propionsäurenitril, 6-Aminohexansäure, 11-Aminoundecansäure, 6-Amino-hexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, a-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N, N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Geeignete Metallsalze sind zum Beispiel Cobaltoctoat oder Cobaltnaphthenoat sowie Vanadium-, Kalium-, Kalzium-, Kupfer-, Mangan- oder Zirkoniumcarboxylate.

Die Harzmischung kann ferner einen Co-Beschleuniger enthalten, insbesondere, wenn eine Übergangsmetallverbindung als Beschleuniger verwendet wird. Abhängig von der gewählten Übergangsmetallverbindung ist der Fachmann in der Lage, einen geeigneten Co-Beschleuniger auszuwählen, um die gewünschten Aushärteeigenschaften zu erreichen. Wird eine Kobaltverbindung als Beschleuniger verwendet, ist der Co-Beschleuniger bevorzugt ein Amin und/oder eine 1,3-Dioxoverbindung. Wird eine Kupferverbindung als Beschleuniger verwendet, ist der Co-Beschleuniger bevorzugt ein Amin, ein Acetoacetamid, ein Kaliumsalz, ein Imidazol und/oder ein Gallat oder Gemische davon. Wird

eine Manganverbindung als Beschleuniger verwendet, ist der Co-Beschleuniger bevorzugt eine 1,3-Dioxoverbindung, ein Thiol und/oder ein Kalium- oder Lithiumsalz oder Gemische davon. Wird eine Eisenverbindung als Beschleuniger verwendet, ist der Co-Beschleuniger bevorzugt eine 1,3-Dioxoverbindung und/oder ein Thiol, bevorzugt in Kombination mit einem Alkalimetallsalz. Geeignete 1,3-Dioxoverbindungen sind Acetylaceton, Acetoacetate und Acetoacetamide.

Die Beschleuniger und/oder Co-Beschleuniger sind beispielsweise in einem Anteil von 0 bis 1 Gewichtsprozent, wie etwa 0,01-0,7 Gew.-%, in der Mörtelmasse enthalten.

Schließlich kann die Mörtelmasse noch weitere organische Zusätze wie Haftverbesserer auf der Grundlage von Silanverbindungen enthalten, wie sie dem Fachmann beispielsweise aus der EP 2 371 782 A2 und der WO 2011/072789 A1 bekannt sind.

Das in der Härterkomponente (B) der erfindungsgemäßen Zweikomponenten-Mörtelmasse enthaltene Härtungsmittel für das radikalisch härtbare Harz der Harzkomponente (A) umfasst, vorzugsweise mindestens ein organisches Peroxid, beispielsweise Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat.

Die organischen Peroxide sind vorzugsweise phlegmatisiert, insbesondere durch Zusatz von Wasser als Phlegmatisierungsmittel und/oder Lösungsmittel. Geeignete Härterkomponenten sind dem Fachmann bekannt und auf dem Markt erhältlich.

Alternativ kann für die Härtung ein Härtersystem verwendet werden, welches peroxidfrei ist und die Bestandteile

- mindestens eine Manganverbindung als Beschleuniger und
- eine 1,3-Dioxoverbindung als Initiator

beinhaltet. Hierzu wird auf die DE 10 2011 078 785 A1 verwiesen.

Ebenfalls alternativ kann für die Härtung ein Härtersystem verwendet werden, welches die Bestandteile:

- als Beschleuniger mindestens ein Metallsalz und
- als Initiator mindestens eine Thiol- und/oder Thiolester-Gruppen beinhaltende Verbindung,

beinhaltet. Hierzu wird auf die DE 10 2013 114 061 A1 verwiesen.

Durch die Kombination bzw. das Mischen der beiden Bestandteile können Radikale gebildet werden, welche anstelle von bisher üblichen Radikalbildnern eine Polymerisation von nichtaromatischen Doppelbindungen, z.B. olefinischen Doppelbindungen, beispielsweise Acrylaten oder Methacrylaten, auslösen können.

Als weitere Alternative kann für die Härtung ein Härtersystem verwendet werden, welches die folgenden Bestandteile beinhaltet:

- als Beschleuniger mindestens ein Metallsalz und
- als Initiator mindestens eine CH-acide Verbindung der Formel

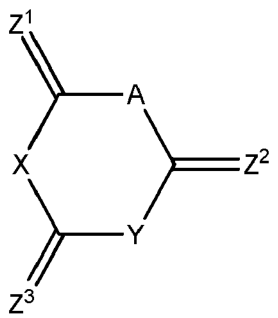

worin

(i)

- A- für $-C(R^1)(R^2)-$ steht,
- X- für eine Bindung, für $-NR^3-$ oder für $-(CR^4R^5)_p-$ steht, oder für -O- steht,

Y für $NR^6$ oder für $(CR^7R^8)_q$ steht, oder für O steht,
wobei wenn X für O steht auch Y für O steht;

wobei vorzugsweise X für $(CR^4R^5)_p$ steht und Y für $CR^7R^8$ steht, oder X für $NR^3$ und Y für $NR^6$ steht;
$Z^1$ für O, S, S=O oder $S(=O)_2$ steht,
$Z^2$ für O, S, S=O oder $S(=O)_2$ steht,
$Z^3$ für O, S, S=O oder $S(=O)_2$ oder für $R^9$ und $R^{10}$ steht,
p für 1, 2 oder 3 steht, vorzugsweise für 1 oder 2
q für 1, 2 oder 3 steht, vorzugsweise für 1;
und die Reste $R^1$, $R^2$, $R^3$, $R^4$, $R^5$, $R^6$, $R^7$, $R^8$, $R^9$ und $R^{10}$ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome (anstelle von C-Atomen;
vorzugsweise ausgewählt aus O, N, wie NH oder N-Alkyl, und S aufweisen, mit der Maßgabe, dass mindestens einer der Reste $R^1$ und $R^2$ Wasserstoff bedeutet,
oder

(ii) offenkettige Verbindungen,

worin das die Brücke bildende Glied $-C(=Z^3)-$ fehlt,
-A- für $-C(R^1)(R^2)-$ steht, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende $C_1$-$C_4$-Alkylgruppe oder $C_1$-$C_4$-Alkoxygruppe oder vorzugsweise für eine jeweils unsubstituierte oder substituierte, gegebenenfalls Heteroatome (anstelle von C-Atomen; insbesondere ausgewählt aus O, N, wie NH oder N-Alkyl, und S) aufweisende $C_1$-$C_4$-Alkoxycarbonylmethylgruppe oder $C_1$-$C_4$-Alkylcarbonylmethylgruppe stehen,
$R^1$ und $R^2$ beide Wasserstoff bedeuten und
$Z^1$ und $Z^2$ die genannten Bedeutungen haben;
oder X für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende $C_1$-$C_4$-Alkylgruppe oder $C_1$-$C_4$-Alkoxygruppe oder $C_1$-$C_4$-Alkoxycarbonylmethylgruppe oder $C_1$-$C_4$-Alkylcarbonylmethylgruppe steht,
Y und $Z^2$ gemeinsam mit dem bindenden Kohlenstoffatom -CN bedeuten,
$Z^1$ die oben genannten Bedeutungen hat, und
$R^1$ und $R^2$ jeweils wie oben definiert sind mit der Maßgabe, dass mindestens einer der Reste Wasserstoff bedeutet;
und/oder Salze davon. Hierzu wird auf die DE 10 2015 003 221 A1 verwiesen.

Bei den als Beschleuniger in Form eines Metallsalzes, was auch Metallkomplexe und Metalloxide einschließt, verwendeten Komponenten handelt es sich in beiden Fällen vorzugsweise um ein oder mehrere Metallsalze oder insbesondere um Salze von organischen und/oder anorganischen Säuren mit Metallen, z.B. ausgewählt aus Kobalt, Zirkonium, Zink, Cer, Zinn, Wismut oder vorzugsweise Vanadium, Mangan, Kupfer oder Eisen, oder Gemischen von zwei oder mehr davon, wobei die organischen Säuren vorzugsweise gesättigt sind, wobei Vanadium und Eisen oder insbesondere Mangan und Kupfer, ggf. in Gegenwart eines oder zweier Co-Beschleuniger mit Metallanteil aus der Gruppe der oben genannten Metalle, bevorzugt ist, insbesondere in Form von Salzen oder Komplexen mit anorganischen Säuren und/oder Carboxylatresten, wie Carboxylaten mit $CH_3$, $C_2$-$C_{20}$-Alkyl, einem $C_6$-$C_{24}$-Arylrest oder $C_7$-$C_{30}$-Aralkylrest, beispielsweise Oktoat, z.B. 2-Ethylhexanoat (Isooctanoat), ferner Neodecanoat, oder Acetylacetonat. Besonders bevorzugt sind Mangancarbonat oder -carboxylate, wie Mn-acetat oder Mnoctoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat und Kupferchlorid umfasst.

In einer weiteren Alternative kann für die Härtung ein Härtersystem verwendet werden, welches die folgenden Bestandteile

- als Beschleuniger mindestens ein Metallsalz und
- als Initiator mindestens ein Aldehyd und/oder Keton und mindestens ein primäres Amin, und/oder
- b2) mindestens ein Imin, welches ein oder mehrere Imin-Strukturinkremente der Formel

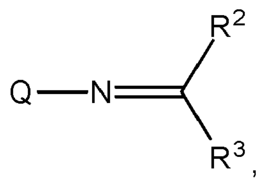

beinhaltet, worin unabhängig voneinander:

Q den organischen Rest des (jeweils) verwendeten Amins darstellt, oder für Wasserstoff steht; und
$R^2$ und $R^3$ unabhängig voneinander Wasserstoff und/oder einen unsubstituierten oder substituierten, gegebenenfalls Doppelbindungen und/oder Heteroatome aufweisenden, ein- oder mehrfach verzweigten oder geradkettigen organischen Rest, welcher mindestens eine aliphatische, heteroaliphatische, alicyclische oder heterocyclische Molekülstruktur, oder eine Kombination von zwei oder mehr der vorgenannten Molekülstrukturen beinhaltet, bedeutet;
und/oder Salze davon,
beinhaltet. Hierzu wird auf die DE 10 2016 124 075 A1 verwiesen.

Zur Einstellung einer geeigneten Viskosität kann die Härterkomponente einen Anteil an anorganischen Füllstoffen und Modifikatoren wie Thixotropiermittel enthalten.

Die erfindungsgemäße Zweikomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Harzkomponente (A) und die Härterkomponente (B) der Mörtelmasse reaktionsinhibierend voneinander getrennt angeordnet sind.

Zur bestimmungsgemäßen Anwendung werden die Harzkomponente (A) und die Härterkomponente (B) aus den getrennten Kammern entleert und in einer geeigneten Vorrichtung, beispielsweise einem Statikmischer, gemischt. Die Mischung aus Harzkomponente (A) und Härterkomponente (B) wird danach mittels einer bekannten Injektionsvorrichtung in das zuvor gereinigte Bohrloch eingebracht. Anschließend wird das zu fixierende Befestigungselement in die Mörtelmasse eingesetzt und justiert. Das Härtungsmittel der Härterkomponente (B) initiiert die radikalische Polymerisation der Harzkomponente (A), sodass die Mörtelmasse unter Umgebungsbedingungen innerhalb weniger Stunden aushärtet.

Gegenstand der Erfindung ist daher auch die Verwendung der erfindungsgemäßen Zweikomponenten-Mörtelmasse zur chemischen Befestigung von Befestigungselementen, insbesondere Ankergewindestangen, Bewehrungseisen, Gewindehülsen und Schrauben, in Bohrlöchern, die in einem in einem Baumaterial, wie etwa Holz oder einem mineralischen Untergrund, vorzugsweise Beton, vorliegen.

Die Erfindung wird nachfolgend anhand eines bevorzugten Ausführungsbeispiels beschrieben, das jedoch in keiner Weise einschränkend zu verstehen ist.

## Beispiele:

### Herstellung von Komponenten

Die Zusammensetzung der im nachstehenden Vergleichsbeispielen V1 und dem Anwendungsbeispiel A1 verwendeten Harz-Komponente ist in der folgenden Tabelle 1 dargestellt.

Tabelle1 :

| **Harz-Komponente** | | [Gew.-%] |
|---|---|---|
| Urethanmethacrylatharz* | | 50,2 |
| Reaktivverdünner | BDDMA | 31,6 |
| Reaktivverdünner | HPMA | 15,1 |
| Beschleuniger | DiPpT | 1,7 |
| Inhibitor | Tempol | 0,4 |
| * Urethanmethacrylatharz gemäß WO 2019/007667, Beispiel C1 | | |

Die nachstehende Tabelle 2 zeigt die Zusammensetzung des Vergleichsbeispiels V1 und des Anwendungsbeispiels A1 jeweils in Gewichtsteilen. In Anwendungsbeispiel A1 wurde als Alkoxyamin-Verbindung der Formel (I) folgende Verbindung (AV1) verwendet:

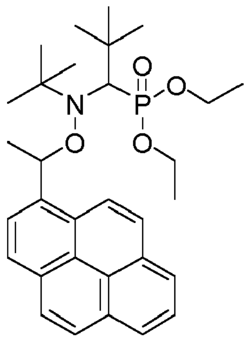

(AV1).

Alkoxyamin-Verbindung AV1 (Diethyl(1-(tert-butyl(1-(pyren-1-yl)ethoxy)amino)-2,2-dimethylpropyl)phosphonat; MW: 523,6 g/mol) hat eine Aktivierungsenergie $E_a$ für die Homolyse der R-O-Bindung von 105,32 kJ/mol. Die in Anwendungsbeispiel A1 verwendete Menge an AV1 entspricht 4 Äquivalente, bezogen auf ein Äquivalent an Polymerisationsinhibitor (Tempol).

Tabelle 2:

| **Bestandteile** | | **V1** | **A1** |
|---|---|---|---|
| **A-Komponente** | | | |
| Harz-Komponente | | 20 | 20 |
| Kieselsäure | TS 720 | 0,6 | 0,6 |
| Alkoxyamin-Verbindung | AV1 | - | 2,2 |
| **B-Komponente** (Perkadox 20S) | | | |
| Dibenzoylperoxid | | 20 | 20 |
| Calciumsulfat | | 75 | 75 |
| Magnesiumhydroxycarbonat | | 5 | 5 |

Als B-Komponente wurde jeweils Perkadox 20S, ein Gemisch, enthaltend 20 Gew.-% Dibenzoylperoxid auf Calciumsulfat/Magnesiumhydroxycarbonat, erhältlich von Akzo Nobel, verwendet. Es werden 3 g der jeweiligen A-Komponente in einer kleinen Speedmixerdose mindestens 3 Stunden bei 5°C temperiert. Dann werden 900 mg der B-Komponente im Speedmixer eingemischt (1500 rpm / 60 s) und sofort eine Probe in einen DSC-Tiegel (Aluminium 40μL -D) eingewogen.

Danach erfolgen isotherme Messungen der Aushärteverläufe bei 20°C, 40°C und 60°C. Der bei 5°C temperierte Tiegel wird in die bei Messtemperatur temperierte DSC-Zelle eingesetzt und die Messung gestartet. Es wird die Gelierzeit (Time-to-peak) von Zeitpunkt des Mischens an gemessen. Die Messung (Dauer: 120 Minuten) erfolgt unter $N_2$. Die dabei erhaltenen Ergebnisse (in [min]) sind in Tabelle 3 dargestellt.

Tabelle 3:

| **Messtemperatur** | **V1** | **A1** | **Verlängerung** |
|---|---|---|---|
| 20°C | 10 | 12,5 | 25% |
| 40°C | 2,1 | 3 | 42% |
| 60°C | 0,55 | 0,95 | 72% |

Bei Raumtemperatur zeigt die Zugabe der Alkoxyamin-Verbindung AV1 eine nur geringe Gelzeitverlägerung von 25%. Bei 40°C ist die durch Zugabe der Alkoxyamin-Verbindung AV1 bewirkte Gelzeitverlägerung mit 42% bereits

merklich. Die durch Zugabe der Alkoxyamin-Verbindung AV1 erzielte Gelzeitverlägerung ist bei 60°C mit 72% besonders signifikant.

Verwendete Komponenten:

| | |
|---|---|
| BDDMA | Evonik Performance Materials GmbH/DE |
| HPMA | Evonik Performance Materials GmbH/DE |
| DiPpT | Saltigo GMBH, Leverkusen/DE |
| Tempol | Evonik Performance Materials GmbH/DE |
| TS 720 | Cabot/Schweiz |
| Perkadox 20S | Akzo Nobel/USA |

## Patentansprüche

1. Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) einen oder mehrere Polymerisationsinhibitoren enthält, ausgewählt aus phenolischen Polymerisationsinhibitoren, Phenothiazin und/oder Derivaten davon, stabilen organischen Radikalen, Oximen sowie Pyrimidinol- oder Pyridinol-Verbindungen, die in para-Position zur Hydroxylgruppe substituiert sind,
***dadurch gekennzeichnet, dass***
die Harzkomponente (A) weiterhin eine Alkoxyamin-Verbindung (I) der Formel R-O-N(R'R") enthält, wobei R für einen Alkylrest steht und R' bzw. R" jeweils für einen organischen Rest steht, und die eine Aktivierungsenergie $E_a$ für die Homolyse der R-O-Bindung im Bereich von 100 bis 120 kJ/mol aufweist.

2. Mörtelmasse gemäß Anspruch 1, wobei die Alkoxyamin-Verbindung (I) eine Aktivierungsenergie $E_a$ für die Homolyse der R-O-Bindung im Bereich von 100 bis 110 kJ/mol, vorzugsweise 100 bis 108 kJ/mol, aufweist.

3. Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) einen oder mehrere Polymerisationsinhibitoren enthält, ausgewählt aus phenolischen Polymerisationsinhibitoren, Phenothiazin und/oder Derivaten davon, stabilen organischen Radikalen, Oximen sowie Pyrimidinol- oder Pyridinol-Verbindungen, die in para-Position zur Hydroxylgruppe substituiert sind,
***dadurch gekennzeichnet, dass***
die Harzkomponente (A) weiterhin eine Alkoxyamin-Verbindung der folgenden Formel (II) enthält

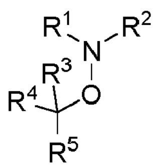

(II)

wobei

$R^1$ eine $C_{3-10}$-Alkylgruppe ist;
$R^2$ eine $C_{2-10}$-Alkylgruppe ist, wobei $R^1$ und $R^2$ zusammen mit dem N-Atom, an das sie gebunden sind, gegebenenfalls einen gegebenenfalls substituierten, gegebenenfalls ungesättigten Heteroalkylring bilden können,
$R^3$ H oder eine $C_{1-4}$-Alkylgruppe ist,
$R^4$ eine $C_{1-4}$-Alkylgruppe ist, und
$R^5$ eine Aryl- oder Heteroarylgruppe ist.

4. Mörtelmasse gemäß Anspruch 3, wobei in der Alkoxyamin-Verbindung der Formel (II)

$R^1$ in $\alpha$-Position zum Stickstoffatom verzweigt ist, vorzugsweise eine in $\alpha$-Position zum Stickstoffatom verzweigte $C_{4-8}$-Alkylgruppe ist,
$R^2$ in $\beta$-Position zum Stickstoffatom verzweigt ist, und gegebenenfalls in $\alpha$-Position zum Stickstoffatom verzweigt oder substituiert ist, wobei der Substituent vorzugsweise ausgewählt ist aus einer Carbonsäurealkylestergruppe, Sulfinatgruppe, Sulfonatgruppe und Phosphonatgruppe, und
$R^5$ eine unsubstituierte oder substituierte $C_{6-20}$-Arylgruppe ist, und
wobei $R^1$, $R^2$, $R^3$, $R^4$ oder $R^5$ gegebenenfalls weiterhin einen protonierbaren, deprotonierbaren oder hydrolysierbaren Rest enthält.

**5.** Mörtelmasse gemäß einem der Ansprüche 3 oder 4, wobei die Alkoxyamin-Verbindung der Formel (II) eine Aktivierungsenergie $E_a$ für die Homolyse der $R^3R^4R^5C$-O-Bindung im Bereich von 100 bis 120 kJ/mol, vorzugsweise 100 bis 110 kJ/mol, stärker bevorzugt 100 bis 108 kJ/mol, aufweist.

**6.** Mörtelmasse gemäß einem der vorangehenden Ansprüche, wobei die Alkoxyamin-Verbindung (I) oder die Alkoxyamin-Verbindung der Formel (II) in einer Menge von 0,5 bis 100 Äquivalenten, vorzugsweise 1 bis 10 Äquivalenten, bezogen auf ein Äquivalent der Polymerisationsinhibitoren, enthalten ist.

**7.** Mörtelmasse gemäß einem der vorangehenden Ansprüche, wobei die Harzkomponente (A) und/oder die Härterkomponente (B) als weiteren Bestandteil mindestens einen anorganischen Zusatzstoff enthält, ausgewählt aus anorganischen Füllstoffen, hydraulisch abbindenden oder polykondensierbaren anorganische Verbindungen, Modifikatoren und Mischungen davon ausgewählt ist.

**8.** Mörtelmasse gemäß Anspruch 7, wobei der anorganische Zusatzstoff einen Füllstoff umfasst, der aus der aus $BaSO_4$, Quarz, Glas, Korund, Porzellan, Steingut, Schwerspat, Leichtspat, Gips, Talkum, Flugasche, Kreide sowie deren Mischungen bestehenden Gruppe ausgewählt ist.

**9.** Mörtelmasse gemäß einem der Ansprüche 7 oder 8, wobei der anorganische Zusatzstoff eine hydraulisch abbindende oder polykondensierbare anorganische Verbindung umfasst, die aus der aus Zement und Gips sowie Mischungen davon bestehenden Gruppe ausgewählt ist, vorzugsweise ein Aluminat-Zement ist.

**10.** Mörtelmasse gemäß einem der Ansprüche 7 bis 9, wobei der anorganische Zusatzstoff einen Modifikator umfasst, der aus der aus Verdickern, Verflüssigern, Thixotropiermittel und Mischungen davon bestehenden Gruppe ausgewählt ist, bevorzugt gefällte oder pyrogene Kieselsäure, Bentonite und/oder Kaolin.

**11.** Mörtelmasse gemäß einem der vorangehenden Ansprüche, wobei das radikalisch härtbare Harz ausgewählt ist aus Verbindungen auf Urethan(meth)acrylatbasis, Verbindungen auf Epoxy(meth)acrylatbasis, Methacrylaten von alkoxylierten Bisphenolen, und Verbindungen auf Basis weiterer ethylenisch ungesättigter Verbindungen, wobei das radikalisch härtbare Harz vorzugsweise ausgewählt ist aus Verbindungen auf Urethan(meth)acrylatbasis, Verbindungen auf Epoxy(meth)acrylatbasis und Methacrylaten von alkoxylierten Bisphenolen, und wobei stärker bevorzugt das radikalisch härtbare Harz ein Urethan(meth)acrylatharz umfasst.

**12.** Mörtelmasse gemäß einem der vorangehenden Ansprüche, wobei die Harzkomponente (A) als weiteren Bestandteil mindestens einen Reaktivverdünner enthält.

**13.** Mörtelmasse gemäß einem der vorangehenden Ansprüche, wobei die Harzkomponente (A) als weiteren Bestandteil mindestens einen Beschleuniger umfasst.

**14.** Mörtelmasse gemäß einem der vorangehenden Ansprüche, wobei die Härterkomponente (B) als Härtungsmittel mindestens ein organisches Peroxid, insbesondere Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat enthält.

**15.** Mörtelmasse gemäß einem der vorangehenden Ansprüche, wobei die Masse in einer Patrone, einer Kartusche oder einem Folienbeutel vorliegt, wobei die Harzkomponente (A) und die Härterkomponente (B) in voneinander getrennten Kammern angeordnet sind.

**16.** Verwendung der Zweikomponenten-Mörtelmasse nach einem der vorhergehenden Ansprüche zur chemischen Befestigung von Befestigungselementen wie Ankergewindestangen, Bewehrungseisen, Gewindehülsen und Schrauben, in Bohrlöchern, die in einem in einem Baumaterial, wie etwa Holz oder einem mineralischen Untergrund vorliegen.

Europäisches Patentamt
European Patent Office
Office européen des brevets

# EUROPÄISCHER RECHERCHENBERICHT

Nummer der Anmeldung
EP 22 18 3291

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 299 351 A1 (HILTI AG [LI]) 28. März 2018 (2018-03-28) * das ganze Dokument * ----- | 1-16 | INV. C04B40/065 C04B26/02 C04B28/02 |
| A | EP 3 299 432 A1 (HILTI AG [LI]) 28. März 2018 (2018-03-28) * das ganze Dokument * ----- | 1-16 | |
| A | EP 3 299 350 A1 (HILTI AG [LI]) 28. März 2018 (2018-03-28) * das ganze Dokument * ----- | 1-16 | |
| A | EP 2 829 525 A1 (HILTI AG [LI]) 28. Januar 2015 (2015-01-28) * das ganze Dokument * ----- | 1-16 | |
| A | EP 3 345 978 A1 (FISCHERWERKE GMBH & CO KG [DE]) 11. Juli 2018 (2018-07-11) * das ganze Dokument * ----- | 1-16 | |

RECHERCHIERTE SACHGEBIETE (IPC)

C04B

Der vorliegende Recherchenbericht wurde für alle Patentansprüche erstellt

1

| Recherchenort | Abschlußdatum der Recherche | Prüfer |
|---|---|---|
| München | 23. Dezember 2022 | Nemes, Csaba A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 18 3291

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-12-2022

| Im Recherchenbericht angeführtes Patentdokument | Datum der Veröffentlichung | Mitglied(er) der Patentfamilie | Datum der Veröffentlichung |
|---|---|---|---|
| EP 3299351 A1 | 28-03-2018 | KEINE | |
| EP 3299432 A1 | 28-03-2018 | KEINE | |
| EP 3299350 A1 | 28-03-2018 | AU 2017329775 A1 | 07-03-2019 |
| | | CA 3035633 A1 | 29-03-2018 |
| | | CN 109715583 A | 03-05-2019 |
| | | EP 3299350 A1 | 28-03-2018 |
| | | EP 3515876 A1 | 31-07-2019 |
| | | ES 2787383 T3 | 16-10-2020 |
| | | JP 6684965 B2 | 22-04-2020 |
| | | JP 2019534834 A | 05-12-2019 |
| | | RU 2019112621 A | 26-10-2020 |
| | | US 2019233339 A1 | 01-08-2019 |
| | | WO 2018054935 A1 | 29-03-2018 |
| EP 2829525 A1 | 28-01-2015 | AU 2014295036 A1 | 18-02-2016 |
| | | CA 2918945 A1 | 29-01-2015 |
| | | CN 105408278 A | 16-03-2016 |
| | | EP 2829525 A1 | 28-01-2015 |
| | | EP 3024797 A1 | 01-06-2016 |
| | | JP 2016527355 A | 08-09-2016 |
| | | RU 2016105800 A | 29-08-2017 |
| | | US 2016137552 A1 | 19-05-2016 |
| | | WO 2015011183 A1 | 29-01-2015 |
| EP 3345978 A1 | 11-07-2018 | DE 102016124075 A1 | 14-06-2018 |
| | | EP 3345978 A1 | 11-07-2018 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0432087 A
- EP 0589831 A
- EP 1935860 A1
- EP 0965619 A1
- DE 19531649 A1
- DE 19956509
- DE 102011077248 B1
- WO 10108939 A1
- US 3297745 A
- US 3772404 A
- US 4618658 A
- GB 2217722 A1
- DE 3744390 A1
- DE 4131457 A1
- US 2011071234 A
- DE 2312559 A1
- US 3629187 A
- EP 44352 A1
- DE 19902685 A1
- EP 0684906 A1
- DE 4111828 A1
- DE 19961342 A1
- WO 2010108939 A
- US 2011071234 A1
- EP 2371782 A2
- WO 2011072789 A1
- DE 102011078785 A1
- DE 102013114061 A1
- DE 102015003221 A1
- DE 102016124075 A1
- WO 2019007667 A